Europäisches Patentamt

European Patent Office

Office européen des brevets

(19)

(11) **EP 0 874 961 B1**

(12) **EUROPÄISCHE PATENTSCHRIFT**

(45) Veröffentlichungstag und Bekanntmachung des Hinweises auf die Patenterteilung:
**08.12.1999 Patentblatt 1999/49**

(21) Anmeldenummer: **97901016.2**

(22) Anmeldetag: **14.01.1997**

(51) Int Cl.⁶: **F16H 61/12**

(86) Internationale Anmeldenummer:
**PCT/EP97/00130**

(87) Internationale Veröffentlichungsnummer:
**WO 97/26472 (24.07.1997 Gazette 1997/32)**

(54) **SICHERHEITSSYSTEM FÜR EIN AUTOMATGETRIEBE**

SAFETY SYSTEM FOR AN AUTOMATIC GEARBOX

SYSTEME DE SECURITE POUR BOITE DE VITESSES AUTOMATIQUE

(84) Benannte Vertragsstaaten:
**DE FR GB**

(30) Priorität: **18.01.1996 DE 19601618**

(43) Veröffentlichungstag der Anmeldung:
**04.11.1998 Patentblatt 1998/45**

(73) Patentinhaber: **ZF FRIEDRICHSHAFEN Aktiengesellschaft**
**88038 Friedrichshafen (DE)**

(72) Erfinder:
• **GIERER, Georg**
**D-88079 Kressbronn (DE)**
• **DEISS, Harald**
**D-88213 Ravensburg (DE)**

(74) Vertreter: **Zietlow, Karl-Peter et al**
**ZF FRIEDRICHSHAFEN AG**
**88038 Friedrichshafen (DE)**

(56) Entgegenhaltungen:
**EP-A- 0 130 827          EP-A- 0 668 455**
**GB-A- 2 278 654          US-A- 4 747 056**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Fehlererkennung für ein vorzugsweise von einer Brennkraftmaschine angetriebenes Automatgetriebe, bei dem außerhalb der Schaltungen der aktuelle Gang überwacht und bei Auftreten eines fehlerbedingten Symptoms in einen Ersatzgang geschaltet wird.

Bei elektro-hydraulischen Automatgetrieben ist es allgemein üblich, dessen ordnungsgemäße Funktion zu überwachen, um sicherheitskritische Situationen zu vermeiden. Überwacht werden die von den Sensoren bereitgestellten Eingangssignale, die elektro-magnetischen Stellglieder, die elektronische Getriebesteuerung und über rückgemeldete Größen die an einer Schaltung beteiligten Kupplungen und Bremsen. In diesem Zusammenhang ist aus der EP-PS 0 316 358 ein Verfahren zur Fehlererkennung bekanntgeworden, bei dem das Automatgetriebe bei einem Fehler in den höchsten Gang schaltet. Die elektro-magnetischen Stellglieder und hydraulischen Nachfolgeschieber sind hierbei derart angeordnet, daß, selbst bei einem Totalausfall der Elektronik, das Automatgetriebe in den fünften Gang schaltet.

Aus der DE-PS 27 00 548 ist ebenfalls ein Verfahren zur Fehlererkennung für ein Automatgetriebe bekannt. Dieses verhindert eine Rückschaltung aus dem höchsten Gang, wenn eine Störung auftritt, indem ein elektro-magnetisches Ventil abgeschaltet wird.

Der beschriebene Stand der Technik hat den Nachteil, daß kurzzeitige Störungen unmittelbar zu einer Schaltung in den höchsten Gang bzw. zum Festhalten des höchsten Ganges führen. In der Praxis bedeutet dies, daß zum Beispiel im Extremfall eine Schaltung vom ersten in den fünften Gang erfolgt.

Der Erfindung liegt die Aufgabe zugrunde, ein derartiges Fehlererkennungsverfahren derart weiterzubilden, daß Störungen kurzfristig erkannt werden, um dann flexibel darauf zu reagieren, wozu auch die im Kennzeichen aufgeführten Maßnahmen dienen.

Die Aufgabe wird erfindungsgemäß gelöst, indem der aktuelle Gang außerhalb der Schaltungen aus den gemessenen Getriebeeingangs- bzw. -ausgangsdrehzahlen überwacht wird, wobei ein über eine vorgebbare Zeit vorhandener Fehler der Gangüberwachung als Symptom interpretiert wird und bei Auftreten eines Symptoms die Normalfunktion verlassen wird. Mit Verlassen der Normalfunktion schaltet das Getriebe aus dem aktuellen Gang in einen Ersatzgang. Der Ersatzgang entspricht hierbei dem nächst höheren Gang, wenn das Symptom im ersten bis vierten Gang auftrat. Der Ersatzgang entspricht dem nächst niederen Gang, wenn das Symptom im fünften Gang auftrat.

Die Lösung bietet den Vorteil, daß große Gangsprünge vermieden werden. So führt zum Beispiel das Auftreten eines Symptoms im zweiten Gang dazu, daß das Getriebe in den dritten Gang schaltet. Hierdurch wird eine unnötig hohe Belastung der Wellen und Kupplungen vermieden und gleichzeitig eine möglichst lange Fahrbarkeit des Fahrzeugs gewährleistet.

Ein weiterer Vorteil besteht darin, daß ein sofortiges Fahren im höchsten Gang aufgrund eines Fehlers vermieden wird, da dies gemäß den gesetzlichen Bestimmungen als abgasrelevanter Fehler angezeigt werden muß.

In einer Ausgestaltung der Erfindung wird vorgeschlagen, daß für jeden Gang ein Symptomzähler vorhanden ist. Bei Vorhandensein eines Symptoms wird der Zählerstand um Eins inkrementiert. Übersteigt der Zählerstand einen Grenzwert, so wird ein Notfahrprogramm aktiviert. Diese Lösung bietet den Vorteil, daß eine dauerhaft geschädigte Kupplung erkannt wird.

In einer weiteren Ausgestaltung wird vorgeschlagen, daß der Notfahrgang dem fünften Gang entspricht, wenn der Zählerstand den Grenzwert in einem der ersten vier Gänge überschreitet und der Notfahrgang dem vierten Gang entspricht, wenn der Zählerstand den Grenzwert im fünften Gang überschreitet. Hierbei werden die Schaltungen sequentiell und druckmoduliert ausgeführt. Überschreitet der Zählerstand den Grenzwert zum Beispiel im zweiten Gang, so erfolgt der Übergang in den dritten Gang, danach der Übergang in den vierten Gang und schließlich der Übergang in den fünften Gang.

In den Zeichnungen ist ein Ausführungsbeispiel dargestellt.
Es zeigen:

Fig. 1       Systemschaubild eines Automatgetriebes;

Fig. 2       Tabelle der Kupplungslogik;

Fig. 3A,
3B,
3C
und 3D      Programmablaufplan;

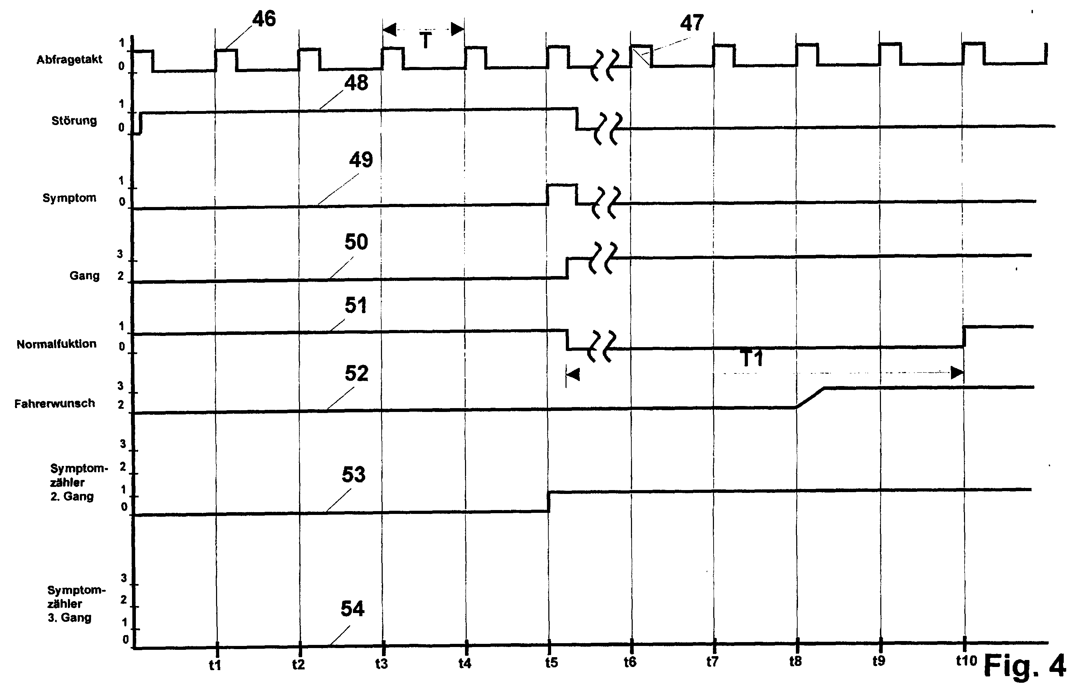

Fig. 4       Signal-Zustandsdiagramm;

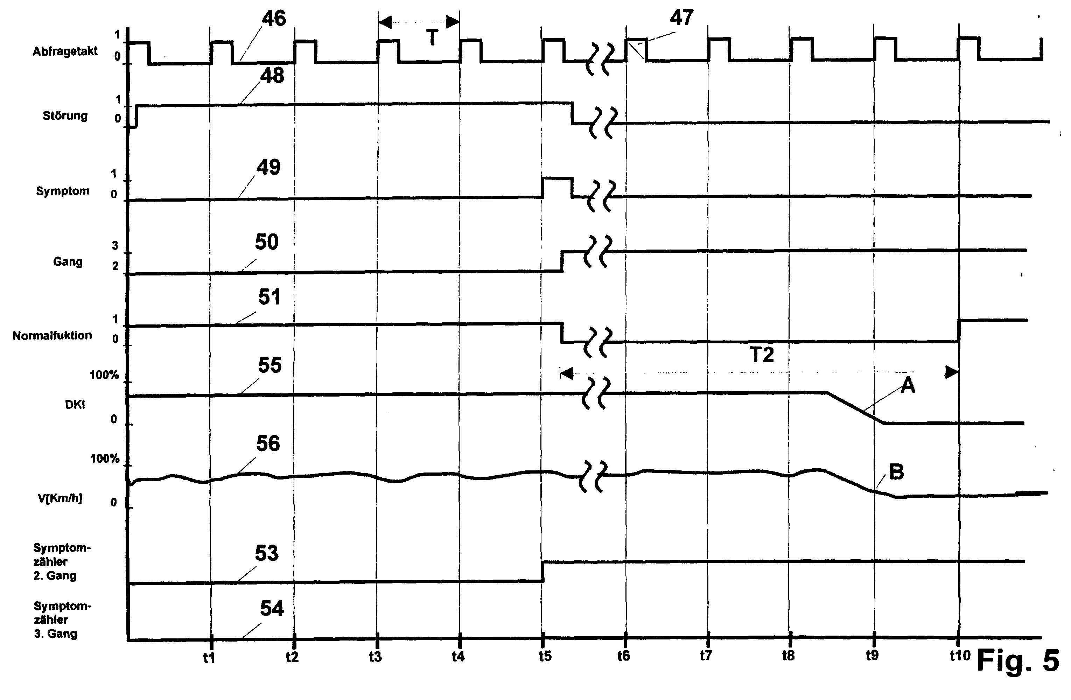

Fig. 5                              Signal-Zustandsdiagramm und

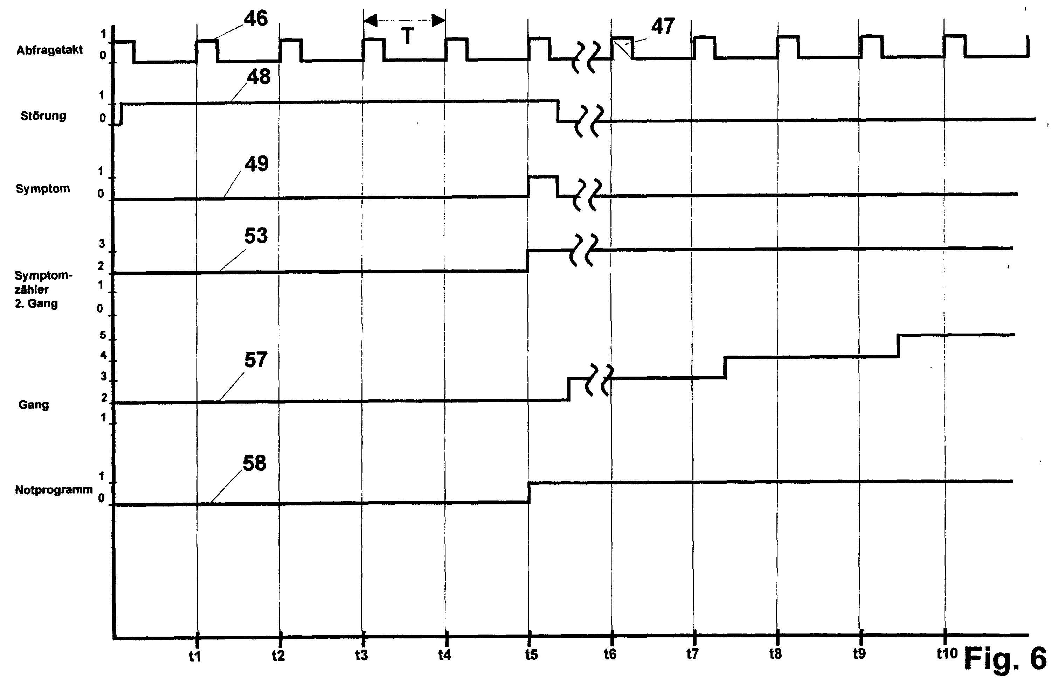

Fig. 6                              Signal-Zustandsdiagramm.

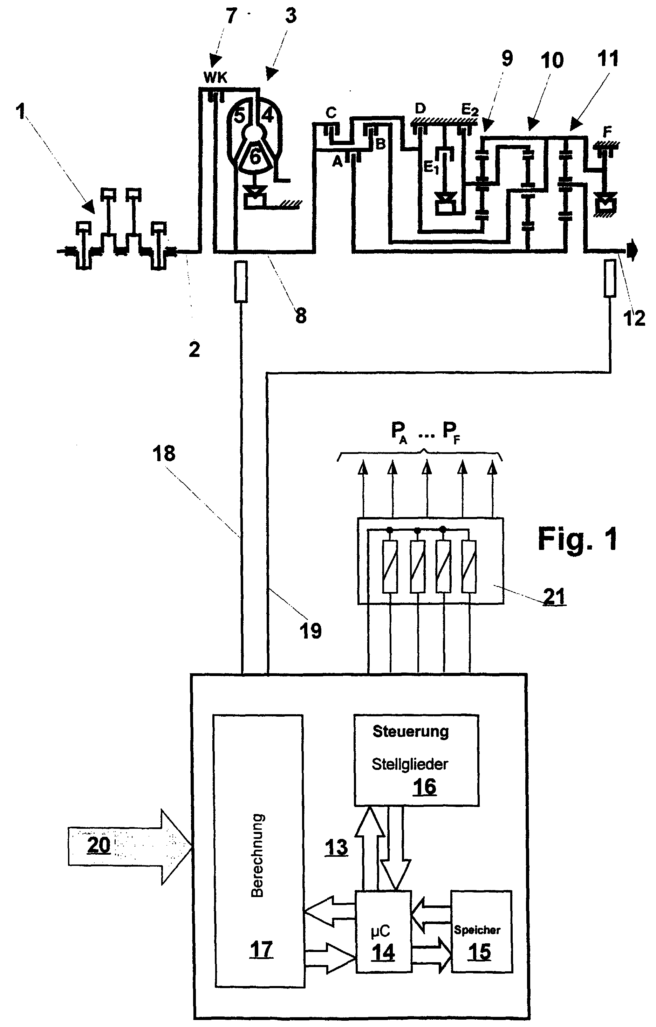

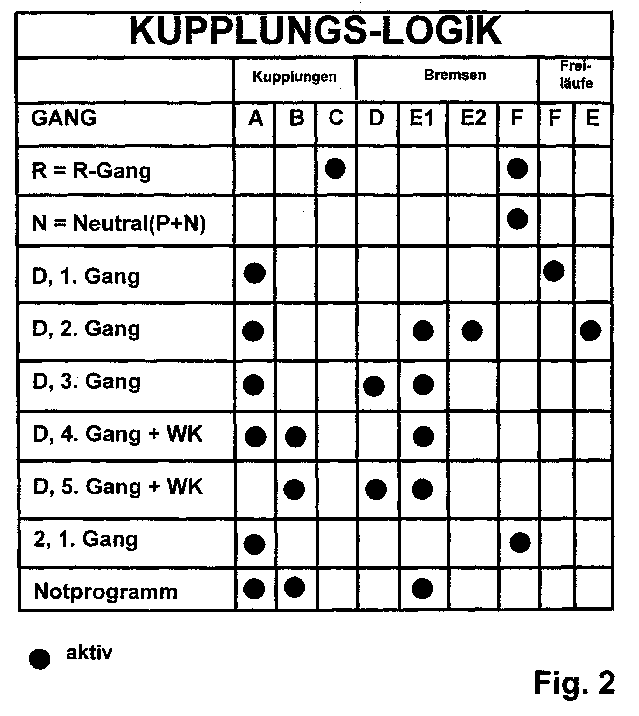

Fig. 1 zeigt ein Systemschaubild eines Automatgetriebes. Dieses besteht aus dem eigentlichen mechanischen Teil mit hydrodynamischem Wandler 3 und Kupplungen/Bremsen A bis F, einem hydraulischen Steuergerät 21 und einem elektronischen Steuergerät 13. Angetrieben wird das Automatgetriebe von einer Antriebseinheit 1, vorzugsweise Brennkraftmaschine, über eine Antriebswelle 2. Diese ist mit dem Pumpenrad 4 eines hydrodynamischen Wandlers 3 drehfest verbunden. Bekanntermaßen besteht der hydrodynamische Wandler 3 aus einem Pumpenrad 4, einem Turbinenrad 5 und einem Leitrad 6. Parallel zum hydrodynamischen Wandler ist eine Wandlerkupplung 7 angeordnet. Wandlerkupplung 7 und Turbinenrad 5 führen auf eine Turbinenwelle 8. Bei betätigter Wandlerkupplung 7 hat die Turbinenwelle 8 die gleiche Drehzahl wie die Antriebswelle 2. Der mechanische Teil des Automatgetriebes besteht aus drei hintereinander angeordneten Planetenradsätzen 9 bis 11, den drei Kupplungen A, B und C, den Bremsen D, E1, E2 und F und zwei Freiläufen. Der Abtrieb geschieht über die Getriebeausgangswelle 12. Diese führt auf ein nicht dargestelltes Differential, welches über zwei Achshalbwellen die Antriebsräder eines Fahrzeugs antreiben. Über eine entsprechende Kupplungs-/Brems-Kombination wird eine Gangstufe ausgewählt. Die Zuordnung der Kupplungslogik zur Gangstufe ist aus Fig. 2 ersichtlich. Da der mechanische Teil für das weitere Verständnis der Erfindung nicht relevant ist, wird auf eine detaillierte Beschreibung verzichtet.

Das elektronische Steuergerät 13 wählt in Abhängigkeit der Eingangsgrößen 18 bis 20 über das hydraulische Steuergerät 21 eine entsprechende Gangstufe aus. Im hydraulischen Steuergerät 21 befinden sich die elektro-magnetischen Stellglieder. Vom elektronischen Steuergerät 13 sind in stark vereinfachter Form als Blöcke dargestellt: Micro-Controller 14, Speicher 15, Funktionsblock Steuerung Stellglieder 16 und Funktionsblock Berechnung 17. Im Speicher 15 sind die getrieberelevanten Daten abgelegt. Getrieberelevante Daten sind zum Beispiel Programme und Daten als auch Diagnosedaten. Üblicherweise ist der Speicher 15 als EProm, EEProm oder als gepufferter RAM ausgeführt. Im Funktionsblock Berechnung 17 werden die für einen Schaltungsverlauf relevanten Daten berechnet. Der Funktionsblock Steuerung Stellglieder 16 dient der Ansteuerung der sich im Hydrauliksteuergerät 21 befindenden Stellglieder. An das elektronische Steuergerät 13 sind Eingangsgrößen 20 angeschlossen. Eingangsgrößen 20 sind zum Beispiel das Signal einer Drosselklappe, das Signal des von der Brennkraftmaschine abgegebenen Moments, die Drehzahl der Brennkraftmaschine und die Temperatur des Motors und des Hydraulikfluids des Automatgetriebes. Üblicherweise werden diese Daten von einem die Brennkraftmaschine steuernden Motorsteuergerät bereitgestellt. Dieses ist in Fig. 1 nicht dargestellt. Als weitere Eingangsgrößen erhält das elektronische Steuergerät 13 die Drehzahl der Turbinenwelle 18 und die Getriebeausgangsdrehzahl 19.

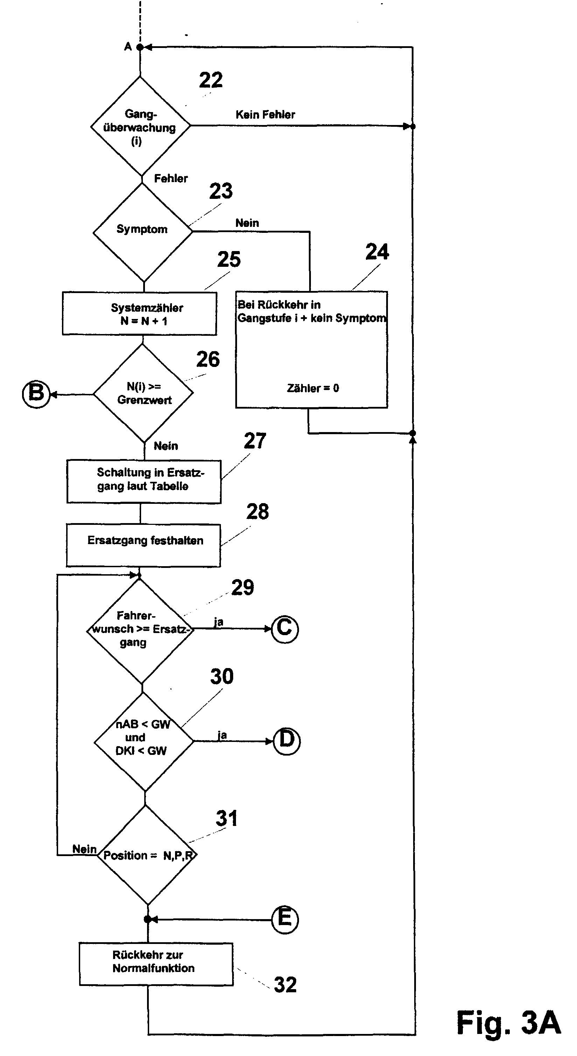

Fig. 3A zeigt einen Teil des Programmablaufplans für das Sicherheitssystem. Der Programmablaufplan beginnt bei der Abfrage Gangüberwachung, Bezugszeichen 22. Die Gangüberwachung prüft den aktuellen Gang, zum Beispiel den zweiten Gang, gemäß der folgenden Definition:

$$nT(t) - nAB(t) \cdot i < Grenzwert$$

nT: Turbinendrehzahl
nAB: Getriebeausgangsdrehzahl
i: Übersetzung des aktuellen Ganges

Ergibt die Abfrage, daß kein Fehler vorliegt, so kehrt das Programm zum Punkt A zurück. Bei Vorliegen eines Fehlers wird in der Abfrage 23 geprüft, ob ein Symptom vorliegt. Ein Symptom liegt dann vor, wenn eine Störung für eine vorgebbare Zeit, zum Beispiel 50 ms, konstant vorhanden war. Weitere Prüfbedingungen für ein Symptom sind:

- Zeit nach einem Reset des Micro-Controllers 14 > Grenzwert und
- Zeitstufe nach einem Schaltungsende ist abgelaufen und
- Getriebeöltemperatur > Grenzwert und
- Wählhebelposition ist D, 4, 3, 2 oder 1 und
- Getriebeausgangsdrehzahl > Grenzwert (nAb(t) > Gw) und
- Turbinendrehzahl > Grenzwert (nT(t) > Gw).

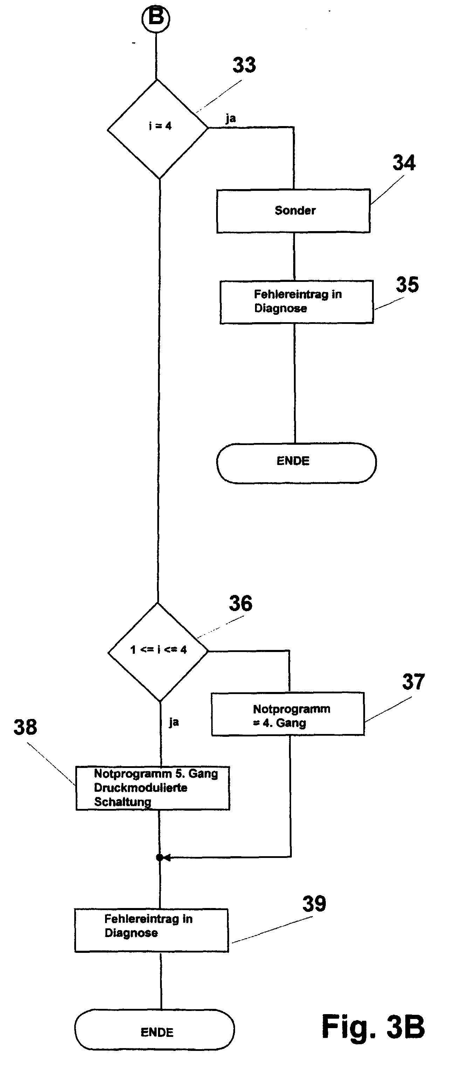

Unter Störungen sind zum Beispiel elektro-magnetische Störimpulse auf den Drehzahlsignalen, Ausfall der Drehzahlsensoren, ein Nichtumschieben eines hydraulischen Nachfolgeschiebers aufgrund von Verschmutzung zu verstehen. Ist kein Symptom vorhanden, so folgt Funktionsblock 24. Im Funktionsblock 24 wird der einem Gang zugeordnete Zähler auf Null gesetzt, wenn in diese Gangstufe zurückgekehrt und kein Symptom erkannt wird. Danach Rückkehr zu Punkt A. Ergibt die Prüfung bei Abfrage 23, daß ein Symptom vorhanden ist, so wird im Funktionsblock 25 der Zählerstand eines Symptomzählers um Eins inkrementiert. Für jeden Gang ist ein eigener Symptomzähler vorhanden. Bei Abfrage 26 wird geprüft, ob der Zählerstand des Symptomzählers, zum Beispiel des Symptomzählers des zweiten Ganges, größer oder gleich einem Grenzwert, zum Beispiel 3, ist. Ergibt die Abfrage, daß der Zählerstand größer oder gleich dem Grenzwert ist, so verzweigt das Programm zum Punkt B. Der Verzweigungspunkt B ist der Beginn eines Unterprogrammes, welches in Verbindung mit der Fig. 3B beschrieben wird. Ist der Zählerstand kleiner als der Grenzwert, so folgt der Funktionsblock 27. Der Funktionsblock 27 bewirkt, daß das Automatgetriebe die Normalfunktion verläßt und in einen Ersatzgang schaltet. Der Ersatzgang ist aus der folgenden Tabelle ersichtlich:

| Istgang (G) | Ersatzgang (G') |
|:-:|:-:|
| 1 | 2 |
| 2 | 3 |
| 3 | 4 |
| 4 | 5 |
| 5 | 4 |

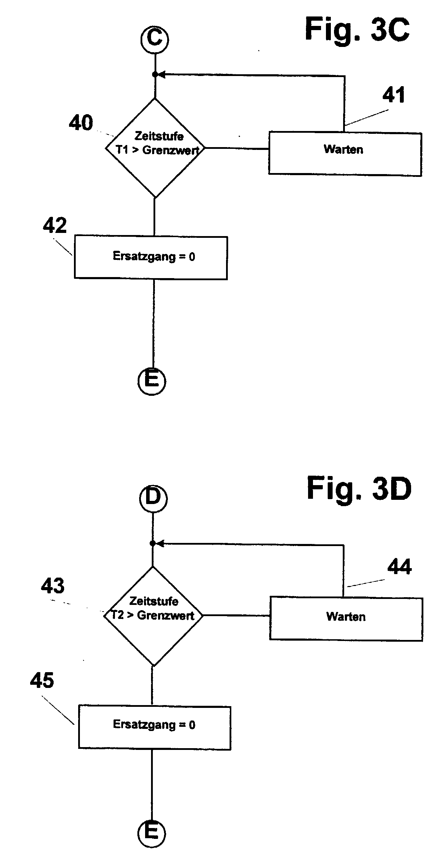

Wie aus der Tabelle ersichtlich ist, schaltet das Automatgetriebe zum Beispiel vom zweiten in den dritten Gang als Ersatzgang. Funktionsblock 28 bewirkt, daß der Ersatzgang festgehalten wird. Bei Abfrage 29 wird geprüft, ob der Fahrerwunsch größer gleich dem Ersatzgang ist. Unter Fahrerwunsch ist die Leistungsanforderung des Fahrers an die Brennkraftmaschine, zum Beispiel mittels Fahrpedalstellung, zu verstehen. Eine positive Abfrage ergibt sich somit dann, wenn der Fahrer das Gaspedal mehr betätigt, als wie zu dem Zeitpunkt, als ein Symptom erkannt wurde. Das Programm verzweigt bei positiver Abfrage zum Punkt C. Der Verzweigungspunkt C wird in Verbindung mit der Fig. 3C erklärt. Ergibt die Prüfung bei Bezugszeichen 29, daß der Fahrerwunsch ungleich oder kleiner dem Ersatzgang ist, so wird im Anschluß bei Bezugszeichen 30 geprüft, ob die Getriebeausgangsdrehzahl und die Drosselklappeninformation kleiner einem Grenzwert sind (DKI(t) < Gw und/oder nAB(t) < Gw). Die Grenzwerte sind so ausgelegt, daß in der Praxis die Ausroll- oder Schubschaltungen darunter fallen. Bei positiver Antwort verzweigt das Programm zum Programmpunkt D. Dieser wird in Verbindung mit Fig. 3D erklärt. Ist die Abfrage negativ, so folgt mit Bezugszeichen 31 die Abfrage, ob die Fahrposition N, P oder R ist. Unter Fahrposition ist die Stellung eines Wählhebels zu verstehen. Ist dies nicht der Fall, so verzweigt der Ablaufplan zurück zur Abfrage, Bezugszeichen 29, nach dem Fahrerwunsch. Bei positivem Abfrageergebnis folgt danach der Funktionsblock 32. Im Funktionsblock 32 ist festgelegt, daß die elektronische Getriebesteuerung zur Normalfunktion zurückkehrt. Danach verzweigt das Programm zum Programmpunkt A, die Schleife ist geschlossen.

Fig. 3B zeigt den Programmteil ab dem Verzweigungspunkt B. Dieser Programmteil wird dann durchlaufen, wenn in Abfrage 26 festgestellt wird, daß der Zählerstand des gangabhängigen Zählers größer oder gleich einem Grenzwert ist (N(i) > Grenzwert). Dieser Programmteil beginnt bei Bezugszeichen 33 mit der Abfrage, ob der Zählerstand des Symptomzählers im vierten Gang den Grenzwert überschreitet. Bei positiver Abfrage verzweigt das Programm zum Funktionsblock 34. Im Funktionsblock 34 wird ein Sonderprogramm aktiviert. In diesem Sonderprogramm wird geprüft, ob ebenfalls im fünften Gang Symptome erkannt werden. Ist dies der Fall, so wird sofort das Notprogramm aktiviert, um ein mehrfaches Pendeln zwischen dem vierten und fünften Gang zu verhindern. Bei Aktivierung des Notprogramms erfolgt gleichzeitig ein Fehlereintrag in die Diagnose, Bezugszeichen 35, des elektronischen Steuergeräts.
Bei negativer Abfrage verzweigt das Programm zur Abfrage, ob der Zählerstand im ersten bis vierten Gang überschritten wurde, Bezugszeichen 36. Bei negativem Ergebnis wird das Notprogramm aktiviert und das Automatgetriebe schaltet in den vierten Gang, Bezugszeichen 37. Wurde der Zählerstand im ersten bis vierten Gang überschritten, so verzweigt das Programm zum Funktionsblock 38, bei dem das Notprogramm aktiviert wird und das Automatgetriebe in den fünften Gang schaltet. Die Schaltungen laufen sequentiell und druckmoduliert ab. Dies bedeutet, wenn zum Beispiel der Zählerstand im zweiten Gang überschritten wurde, so schaltet das Getriebe in den dritten Gang, dann in den vierten Gang und schließlich in den fünften Gang. Druckmoduliert bedeutet, daß die Schaltübergänge nicht mit maximalem Druck erfolgen. Danach durchläuft das Programm den Funktionsblock 39 mit einem Fehlereintrag in die Diagnose des elektronischen Steuergeräts. Mit dem Fehlereintrag ist dieser Programmteil beendet.

Fig. 3C zeigt einen Programmteil, der dann durchlaufen wird, wenn der Fahrerwunsch größer dem Ersatzgang ist. Dieses Programmteil beginnt mit Bezugszeichen 40 mit der Abfrage, ob die Zeitstufe T1 größer einem Grenzwert ist. Ist die Bedingung nicht erfüllt, so wird eine Warteschleife 41 durchlaufen. Bei positiver Abfrage, d. h. die Zeit T1 ist überschritten, wird im Funktionsblock 42 der Ersatzgang gleich Null gesetzt. Danach verzweigt das Programm zum Verzweigungspunkt E, siehe Fig. 3A.

Fig. 3D zeigt einen Programmteil, der durchlaufen wird, wenn sowohl die Getriebeausgangsdrehzahl als auch die Drosselklappeninformation kleiner einem Grenzwert sind (DKI(t) < Gw und nAB(t) < Gw). Der Programmteil beginnt mit der Abfrage, ob die Zeitstufe T2 größer einem Grenzwert ist, Bezugszeichen 43. Ist dies nicht der Fall, so wird die Warteschleife 44 durchlaufen. Bei positivem Abfrageergebnis wird im Funktionsblock 45 der Ersatzgang auf Null gesetzt. Danach verzweigt das Programm zum Verzweigungspunkt E, siehe Fig. 3A.

Fig. 4 zeigt den Signal-Zeit-Verlauf für mehrere Zustandsgrößen. Bezugszeichen 46 zeigt den Abfragetakt. Der Abfragetakt 46 ist konstant, zum Beispiel 10 ms. Die zeitliche Länge eines Einzelimpuls, Bezugszeichen 47, entspricht der Zeitdauer, die der Micro-Controller 14 zur Prüfung der Gangüberwachung benötigt. Bezugszeichen 48 zeigt im Bereich t0 bis t6 den Fall, daß eine Störung auftritt. Bezugszeichen 49 zeigt den Signalverlauf des Symptoms. Bezugszeichen 50 zeigt eine Gangtreppe, hier der zweite und dritte Gang. Bezugszeichen 51 zeigt den Zustand der Normalfunktion, wobei hierin der Pegel 1 bedeutet, daß die Normalfunktion aktiv ist, es wurde keine Störung festgestellt. Pegel 0 bedeutet, daß die Normalfunktion desaktiviert ist und der Ersatzgang ausgegeben wird. Bezugszeichen 52 zeigt einen angenommenen Verlauf des Fahrerwunsches. Der Pegel entspricht hierbei dem angeforderten Gang. Bezugszeichen 53 zeigt den Zählerstand für den Symptomzähler zweiter Gang und Bezugszeichen 54 zeigt den Zählerstand des Symptomzählers dritter Gang.

Der Ablauf ist folgendermaßen: Im Zeitpunkt t0 beginnt der Programmdurchlauf für die Gangüberwachung. Während dieses Programmdurchlaufes wird z. B. festgestellt, daß eine Störung vorliegt. Das Signal Störung 48 geht von Null auf Eins über. Ist die Störung für eine vorgebbare Zeit konstant vorhanden, so wird die Störung als Symptom erkannt. In Fig. 4 sind als vorggebbare Zeit fünf Abfragetakte eingetragen. Zum Zeitpunkt t5 wechselt somit das Signal für das Symptom 49 von Null nach Eins. Nachdem ein Symptom erkannt wurde, wird, wie in Fig. 3A ausgeführt, geprüft, ob der Zählerstand einen Grenzwert überschreitet. Bei diesem Beispiel wurde davon ausgegangen, daß der Zählerstand für den zweiten Gang, Bezugszeichen 53, Null hat. Mit Erkennen eines Symptoms wird somit der Zählerstand des Symptomzählers zweiter Gang um Eins inkrementiert. Da der Zählerstand den Grenzwert, zum Beispiel drei, noch nicht erreicht bzw. überschritten hat, wird somit ein Ersatzgang aktiviert. Dies bedeutet, das Automatgetriebe schaltet vom zweiten in den dritten Gang. In Fig. 4 geschieht dies während des Zeitraums t5 bis t6. Gleichzeitig wird mit Aktivierung des Ersatzgangs die Normalfunktion, Bezugszeichen 51, verlassen, d. h. der Pegel wechselt von Eins nach Null. Angenommen, der Fahrer betätigt zum Zeitpunkt t8 das Fahrpedal, so daß er die 2-3-Hochschaltkennlinie überschreitet. Bezugszeichen 52 zeigt diesen Fahrerwunsch. Gemäß dem Programmablaufplan von Fig. 3A wird, nachdem der Fahrerwunsch größer oder gleich dem Ersatzgang ist, für eine bestimmte Zeit T1 gewartet, bevor der Ersatzgang auf Null gesetzt wird und das Automatgetriebe zur Normalfunktion zurückkehrt. Diese zeitliche Verzögerung zwischen dem Fahrerwunsch und der Pegeländerung der Normalfunktion, Bezugszeichen 51, ist im Zeitraum t5 bis t10 dargestellt. Bei dem erläuterten Beispiel wurde davon ausgegangen, daß, nachdem das Automatgetriebe in den dritten Gang geschaltet hat, im dritten Gang keine Störung bzw. kein Symptom erkannt wurde. Dies ist durch den konstanten Verlauf des Symptomzählers dritter Gang dargestellt, Bezugszeichen 54.

Fig. 5 zeigt eine weitere Möglichkeit der Rückkehr von der Ersatz- zur Normalfunktion. Im Zeitbereich t0 bis t5 entsprechen die Signalverläufe des Abfragetakts 46, der Störung 48, des Symptoms 49, des Ganges 50, der Normalfunktion 51, des Symptomzählers zweiter Gang, Bezugszeichen 53, und des Symptomzählers dritter Gang, Bezugszeichen 54, dem Verlauf aus Fig. 4. Zusätzlich aufgenommen wurden der Signalverlauf der Drosselklappeninformation DKI, Bezugszeichen 55, und der Signalverlauf einer Fahrzeuggeschwindigkeit, Bezugszeichen 56. Der Signalwert der Drosselklappeninformation bewegt sich zwischen 0 und 100 % entsprechend Leer- und Vollgas. Die Fahrzeuggeschwindigkeit bewegt sich zwischen 0 und 100 % entsprechend Stillstand und maximal möglicher Fahrzeuggeschwindigkeit.

Zum Zeitpunkt t5 wird ein Symptom erkannt. Der Symptomzähler zweiter Gang wird um Eins inkrementiert. Da der Symptomzähler zweiter Gang den Grenzwert nicht erreicht bzw. überschreitet, wird in den Ersatzgang, hier wieder der dritte Gang, geschaltet. Gleichzeitig mit der Schaltung wechselt die Normalfunktion, Bezugszeichen 51, den Pegel. Bei diesem Beispiel wird nun davon ausgegangen, daß der Fahrer nach dem Zeitpunkt t8 das Gaspedal freigibt, so daß die Drosselklappeninformation DKI von ihrem anfänglichen Wert auf Null zurückgeht. Im Zeitraum t5 bis t9 unterschreitet die Drosselklappeninformation den Grenzwert A. Gleichzeitig verringert sich die Fahrzeuggeschwindigkeit. Die Fahrzeuggeschwindigkeit unterschreitet im Zeitpunkt t9 einen Grenzwert B. Nachdem beide Grenzwerte unterschritten sind, wird für eine vorggebbare Zeit T2 gewartet. Nach Ablauf der Zeitstufe T2 wird der Ersatzgang auf Null gesetzt, so daß die Normalfunktion ihren Pegel von Null nach Eins wechselt. Das Automatgetriebe kehrt zur Normalfunktion zurück. Bei diesem Beispiel wurde ebenfalls davon ausgegangen, daß im Ersatzgang, also im dritten Gang, keine Störung auftritt. Der Symptomzähler dritter Gang weist somit einen konstanten Pegel von Null auf.

In Fig. 6 ist der Fall dargestellt, daß, nachdem ein Symptom erkannt wurde, der Zählerstand den Grenzwert erreicht bzw. überschreitet. Im Zeitbereich t0 bis t5 entspricht der Signalverlauf des Abfragetakts 46, der Störung 48 und des Symptoms 49 den Signalverläufen aus Fig. 4 und 5. Zusätzlich aufgenommen wurde die Gangtreppe des Automatgetriebes von Null bis Fünf, Bezugszeichen 57, und das Zustandssignal für das Notprogramm, Bezugszeichen 58. Bei diesem Beispiel wird davon ausgegangen, daß der Symptomzähler zweiter Gang bereits den Zähleranfangswert von Zwei aufweist, Bezugszeichen 53. Im Zeitpunkt t5 wird ein Symptom erkannt. Infolge dessen wird der Symptomzähler zweiter Gang um Eins inkrementiert. Dadurch erreicht der Symptomzähler zweiter Gang den Grenzwert von Drei. Gemäß der Figurenbeschreibung von 3A und 3B wird nun geprüft, in welchem Gang der Zählerstand den Grenzwert überschritten hat. Da dies im zweiten Gang war, wird das Notprogramm fünfter Gang aktiviert. Dies ist aus dem Signalverlauf des Notprogramms ersichtlich, Bezugzeichen 58. Das Automatgetriebe schaltet somit vom zweiten in den dritten Gang (Zeitraum t5 bis t7), dann in den vierten Gang (Zeitraum t7 bis t9) und schließlich in den fünften Gang (Zeitraum t9 bis t10).

Die Schaltübergänge verlaufen somit sequentiell und druckmoduliert. Dies bedeutet, daß die Schaltungen nicht mit Maximaldruck ausgeführt werden. Nach dem Zeitpunkt t10 wird ein Fehlereintrag in die Diagnose vorgenommen.

Bezugszeichen

1 Antriebseinheit
2 Antriebswelle
3 hydrodynamischer Wandler
4 Pumpenrad
5 Turbinenrad
6 Leitrad
7 Wandlerkupplung
8 Turbinenwelle
9 erster Planetenradsatz
10 zweiter Planetenradsatz
11 dritter Planetenradsatz
12 Getriebeausgangswelle
13 elektronisches Steuergerät
14 Micro-Controller
15 Speicher
16 Funktionsblock Steuerung Stellglieder
17 Funktionsblock Berechnung
18 Turbinendrehzahl-Signal
19 Getriebeausgangsdrehzahl-Signal
20 Eingangsgrößen
21 hydraulisches Steuergerät
22 Abfrage Gangüberwachung
23 Abfrage Symptom
24 Funktionsblock
25 Funktionsblock
26 Abfrage Zählerstand
27 Funktionsblock
28 Funktionsblock
29 Abfrage Fahrerwunsch
30 Abfrage Schubbetrieb
31 Abfrage Wählhebelposition
32 Funktionsblock
33 Abfrage vierter Gang
34 Funktionsblock Sonderprogramm
35 Funktionsblock Diagnoseeintrag
36 Abfrage erster bis vierter Gang
37 Funktionsblock Notprogramm vierter Gang
38 Funktionsblock Notprogramm fünfter Gang
39 Funktionsblock Diagnoseeintrag
40 Abfrage Zeitstufe T1
41 Warteschleife
42 Funktionsblock
43 Abfrage Zeitstufe T2
44 Warteschleife

45  Funktionsblock
46  Abfragetakt
47  Zeitraum Gangüberwachung
48  Signalverlauf Störung
49  Signalverlauf Symptom
50  Gangtreppe Gang 2 und 3
51  Signalverlauf Normalfunktion
52  Fahrerwunsch
53  Symptomzähler zweiter Gang
54  Smptomzähler dritter Gang
55  Drosselklappeninformation (DKI)
56  Fahrzeuggeschwindigkeit (v)
57  Gangtreppe Gang 1 bis 5
58  Signalverlauf Notprogramm

**Patentansprüche**

1.  Verfahren zur Fehlererkennung für ein vorzugsweise von einer Brennkraftmaschine angetriebenes Automatgetriebe, wobei das Automatgetriebe einen hydrodynamischen Wandler (3), Kupplungen und Bremsen (A bis F), ein hydraulisches Steuergerät (21) und ein elektronisches Steuergerät (13) umfaßt, wobei das elektronische Steuergerät (13) in Abhängigkeit von Eingangsgrößen (18 bis 20) über das hydraulische Steuergerät (21) die Kupplungen und Bremsen steuert oder regelt, und wobei über eine Kupplungs-/Brems-Kombination ein entsprechender Gang bzw. eine Übersetzung (i) geschaltet wird,
    dadurch **gekennzeichnet**, daß

    -   das elektronische Steuergerät (13) anhand des Getriebeeingangsdrehzahl-Verlaufes ($nT(t)$) und des Getriebeausgangsdrehzahl-Verlaufes ($nAB(t)$) außerhalb der Schaltungen den aktuellen Gang ($GUEW = nT(t) - nAb(t)xi$) überwacht,
    -   wobei eine über eine vorgebbare Zeit konstant vorhandene Störung bei der Gangüberwachung als Fehler interpretiert wird,
    -   wobei bei Auftreten eines Fehlers aus dem aktuellen Gang (G) in einen Ersatzgang (G') geschaltet wird,

        --   welcher dem nächst höheren Gang entspricht ($G'=G+1$), wenn der aktuelle Gang (G) der erste (G1), zweite (G2), dritte (G3) oder vierte (G4) Gang war, und
        --   welcher dem nächst niederen Gang entspricht ($G' = G-1$), wenn der aktuelle Gang der fünfte Gang (G5) war.

2.  Verfahren zur Fehlererkennung nach Anspruch 1,
    dadurch **gekennzeichnet**, daß
    für jeden Gang ein Fehlerzähler ($N(i)$) vorhanden ist, und bei Vorhandensein eines Fehlers der Zählerstand um Eins inkrementiert wird und ein Notfahrprogramm aktiviert wird, wenn der Zählerstand einen Grenzwert ($N(i) >$ Grenzwert) erreicht oder übersteigt.

3.  Verfahren zur Fehlererkennung nach Anspruch 2,
    dadurch **gekennzeichnet**, daß
    der Fehlerzähler ($N(i)$) eines Gangs auf Null gesetzt wird, wenn nach einer Schaltung aus diesem Gang in diesen wieder zurückgeschaltet wird und kein Fehler auftritt.

4.  Verfahren zur Fehlererkennung nach Anspruch 2,
    dadurch **gekennzeichnet**, daß
    das Notfahrprogramm in den fünften Gang (G5) schaltet, wenn der Zählerstand ($N(i)$) den Grenzwert in einem der ersten vier Gänge erreicht oder überschreitet ($N(i) >$ Grenzwert, $i = 1 ... 4$) und das Notfahrprogramm in den vierten Gang (G4) schaltet, wenn der Zählerstand den Grenzwert im fünften Gang erreicht oder überschreitet ($N(5) >$ Grenzwert), wobei die Schaltungen sequentiell und druckmoduliert ausgeführt werden und mit Aktivierung des Notfahrprogramms ein Diagnoseeintrag vorgenommen wird.

5.  Verfahren zur Fehlererkennung nach Anspruch 1,

dadurch **gekennzeichnet**, daß der Ersatzgang (G') dann verlassen und zum normalen Betrieb zurückgekehrt wird, wenn entweder

- der Fahrerwunsch dem Ersatzgang entspricht oder
- der Fahrer den Wählhebel in Position Parken (P), Neutral (N) oder Rückwärts (R) schwenkt oder
- die Fahrzeuggeschwindigkeit (v(t)) und das Signal einer Drosselklappe (DKI(t)) einen Grenzwert unterschreiten (v(t) < Grenzwert und DKI(t) < Grenzwert).

## Claims

1. Fault detection method for an automatic gearbox which is preferably driven by an internal combustion engine, wherein the automatic gearbox comprises a hydrodynamic converter (3), couplings and brakes (A to F), a hydraulic control instrument (21) and an electronic control instrument (13), wherein the electronic control instrument (13) controls or regulates the couplings and brakes via the hydraulic control instrument (21) in accordance with input quantities (18 to 20), and wherein a corresponding gear or a gear ratio (i) is engaged via a coupling-brake combination,
   characterised in that

   - the electronic control instrument (13) monitors the actual gear (GUEW = nT(t) - nAB(t)xi) outside of the gear changes on the basis of the gearbox input speed characteristic (nT(t)) and the gearbox output speed characteristic (nAB(t)),
   - wherein a disturbance which is constant over a predeterminable time is interpreted as a fault during gear monitoring,
   - wherein a change from the actual gear (G) into an alternative gear (G') takes place upon the occurrence of a fault,

     -- which gear corresponds to the next-higher gear (G' = G+1) if the actual gear (G) was the first (G1), second (G2), third (G3) or fourth (G4) gear, and
     -- which corresponds to the next-lower gear (G' = G-1) if the actual gear was the fifth gear (G5).

2. Fault detection method according to claim 1,
   characterised in that a fault counter (N(i)) is provided for each gear, and the count is incremented by one if a fault exists and an emergency driving program is activated if the count reaches or exceeds a limit value (N(i) > limit value).

3. Fault detection method according to claim 2,
   characterised in that the fault counter (N(i)) of a gear is zeroed if, after changing from this gear, there is a change back into the latter and no fault occurs.

4. Fault detection method according to claim 2,
   characterised in that the emergency driving program engages fifth gear (G5) if the count (N(i)) reaches or exceeds the limit value in one of the first four gears (N(i) > limit value, i = 1 ... 4) and the emergency driving program engages fourth gear (G4) if the count reaches or exceeds the limit value in fifth gear (N(5) > limit value), wherein the gear changes are carried out sequentially and with pressure modulation, and a diagnostic routine is introduced with the activation of the emergency driving program.

5. Fault detection method according to claim 1,
   characterised in that a return from the alternative gear (G') to normal operation takes place when either

   - the driver's wish corresponds to the emergency gear or
   - the driver moves the selector lever into the parking (P), neutral (N) or reverse (R) position or
   - the vehicle velocity (v(t)) and the signal of a throttle valve (DKI(t)) fall below a limit value (v(t) < limit value and DKI(t) < limit value).

**Revendications**

1. Procédé pour la détection de défauts pour une boîte de vitesses automatique entraînée de préférence par un moteur à combustion interne, la boîte de vitesses automatique comportant un convertisseur hydrodynamique (3), des embrayages et des freins (A à F), un appareil de commande hydraulique (21) et un appareil de commande électronique (13), l'appareil de commande électronique (13) commandant et réglant les embrayages et freins en fonction de grandeurs d'entrée (18 à 20) par l'intermédiaire de l'appareil de commande hydraulique, et dans lequel par une combinaison embrayage/frein, une vitesse, respectivement une transmission, est engagée **caractérisé** en ce que

   - l'appareil de commande électronique (13) surveille la vitesse effective (GUEW = nT(t) - nAb(t)xi) en dehors des enclenchements de vitesses au moyen de l'évolution de la vitesse de rotation d'entrée (nT(t)) et de l'évolution de la vitesse de rotation de sortie (nAB(t)) de la transmission,
   - lors de la surveillance, une perturbation présente de façon constante pendant un temps prédéfini de la vitesse enclenchée est interprétée comme défaut,
   - en présence d'un défaut, le passage de la vitesse actuellement enclenchée (G) en une vitesse de remplacement (G') est effectué,

      - - laquelle correspond à la vitesse suivante supérieure (G'= G + 1) lorsque la vitesse actuellement enclenchée (G) était la première (G1), la deuxième (G2) la troisième (G3) ou la quatrième (G4) vitesse, et
      - - laquelle correspond à la vitesse suivante inférieure (G' = G- 1) lorsque la vitesse actuellement enclenchée était la cinquième (G5) vitesse.

2. Procédé pour la détection de défauts selon la revendication 1, **caractérisé** en ce que pour chaque vitesse existe un compteur de défauts (N(i)), et qu'en présence d'un défaut, la position du compteur est incrémentée par Un et qu'un programme de fonctionnement de secours est activé lorsque la position du compteur atteint ou dépasse une valeur limite (N(i) > valeur limite).

3. Procédé pour la détection de défauts selon la revendication 2, **caractérisé** en ce que le compteur de défauts (N(i)) d'une vitesse est mis à ZERO lorsque, après un changement de vitesse à partir de cette vitesse, la même vitesse est enclenchée de nouveau et qu'aucun défaut ne se présente.

4. Procédé pour la détection de défauts selon la revendication 2, **caractérisé** en ce que le programme de fonctionnement de secours enclenche la cinquième vitesse (G5) lorsque la position du compteur (N(i)) atteint ou dépasse la valeur limite dans une des quatre premières vitesses (N(i) > valeur limite, i = 1 ... 4) et en ce que le programme de fonctionnement de secours engage la quatrième vitesse (G4) lorsque la position du compteur atteint ou dépasse la valeur limite dans la cinquième vitesse (N(5) > valeur limite), les changements de vitesse étant réalisés de façon séquentielle et à pression modulée et une entrée de diagnostic étant effectuée avec l'activation du programme de fonctionnement de secours.

5. Procédé pour la détection de défauts selon la revendication 1, **caractérisé** en ce que la vitesse de substitution (G') est quittée et le fonctionnement normal est repris lorsque, soit :

   - la demande du conducteur correspond à la vitesse de substitution
   - le conducteur tourne le levier de sélection sur la position PARKING (P), NEUTRE (N) ou ARRIERE (R),
   - la vitesse du véhicule (v(t)) et le signal d'un clapet d'étranglement (DKI(t)) passent en dessous d'une valeur limite : (v(t) < valeur limite et DKI(t) < valeur limite).

Fig. 1

# KUPPLUNGS-LOGIK

| GANG | Kupplungen | | | Bremsen | | | | Frei-läufe | |
|---|---|---|---|---|---|---|---|---|---|
| | A | B | C | D | E1 | E2 | F | F | E |
| R = R-Gang | | | ● | | | | ● | | |
| N = Neutral(P+N) | | | | | | | ● | | |
| D, 1. Gang | ● | | | | | | | ● | |
| D, 2. Gang | ● | | | | ● | ● | | | ● |
| D, 3. Gang | ● | | | ● | ● | | | | |
| D, 4. Gang + WK | ● | ● | | | ● | | | | |
| D, 5. Gang + WK | | ● | | ● | ● | | | | |
| 2, 1. Gang | ● | | | | | | ● | | |
| Notprogramm | ● | ● | | | ● | | | | |

● aktiv

**Fig. 2**

A

**22**

Gangüberwachung
(i)

Kein Fehler

Fehler

**23**

Symptom

Nein

**25**

Systemzähler
N = N + 1

**24**

Bei Rückkehr in
Gangstufe i + kein Symptom

Zähler = 0

**26**

N(i) >=
Grenzwert

B

Nein

**27**

Schaltung in Ersatzgang laut Tabelle

**28**

Ersatzgang festhalten

**29**

Fahrerwunsch >= Ersatzgang

ja

C

**30**

nAB < GW
und
DKI < GW

ja

D

**31**

Position = N,P,R

Nein

E

Rückkehr zur
Normalfunktion

**32**

## Fig. 3A

**Fig. 3B**

# Fig. 3C

**40**

**41**

Zeitstufe
T1 > Grenzwert

Warten

**42**

Ersatzgang = 0

C

E

# Fig. 3D

**43**

**44**

Zeitstufe
T2 > Grenzwert

Warten

**45**

Ersatzgang = 0

D

E

EP 0 874 961 B1

**46**  **47**

Abfragetakt

**48**

Störung

**49**

Symptom

**50**

Gang

**51**

Normalfuktion

T1

**52**

Fahrerwunsch

**53**

Symptomzähler
2. Gang

**54**

Symptomzähler
3. Gang

T

t1  t2  t3  t4  t5  t6  t7  t8  t9  t10

**Fig. 4**

Fig. 5

EP 0 874 961 B1

16

Fig. 6